# EUROPEAN PATENT APPLICATION

(11) **EP 2 680 626 A1**
(43) Date of publication of application: **01.01.2014**
(21) Application number: 12174039.3
(22) Date of filing: 28.06.2012
(51) Int. Cl.: H04W 4/20, H04L 29/08

(54) **System and method for establishing a distributed social network**

(71) Applicant: BlackBerry Limited, Waterloo, ON N2K 0A7 (CA)
(72) Inventor: George, Richard John, Waterloo, Ontario N2L 3W8 (CA)
(74) Representative: Moore, Barry

(57) **Abstract**

Provided herein is a distributed social network. The network comprises a host mobile device comprising a social media application and a mobile device in communication with the mobile device, the mobile device operable to obtain social media data from the host mobile device.

## Description

### TECHNICAL FIELD

The following relates to systems and method for a distributed social network.

### DESCRIPTION OF THE RELATED ART

Mobile communication devices can be used to exchange messages and/or data. Mobile communication devices may also be referred to as mobile devices. Data can be exchanged between devices via email, instant messaging (IM), short messaging service (SMS), short and long range communication protocols, etc. Mobile communication devices are often also configured to provide cellular telephony services, voice communications over an internet connection (e.g., via Wi-Fi), or both.

Mobile communication devices can be used to access social networks using a network connection, for example, an internet connection. Mobile devices can provide information to social networks or to retrieve information from social networks. For example, a mobile device can upload images to a social network or retrieve images that were previously uploaded to the social network. Examples of social networks include FACEBOOK™, TWITTER™, and LINKEDIN™.

Social networks typically enable users to build a "profile" comprising several elements of data, for example, photos, text, and video; and enable users to access information from other users' profiles. This profile data is stored on a server and is accessible to users operating mobile devices.

Social networks may also provide privacy options to restrict access to a user's profile to only authorized users. For example, some social networks enable a user to allow contacts labeled as "friends" or "family" to access that user's profile while limiting or preventing others from accessing the profile.

For social media networks, such as those discussed above, a central server is used to host the social network and provide social media data to each mobile device accessing the social network. Social media data may comprise text, images, audio files, video, messages, status updates, notifications, calendar appointments, or other types of data. To provide social media data to the social media network, a user of a mobile device is typically required to upload the social media data to a central server which may then provide the social media data to other devices.

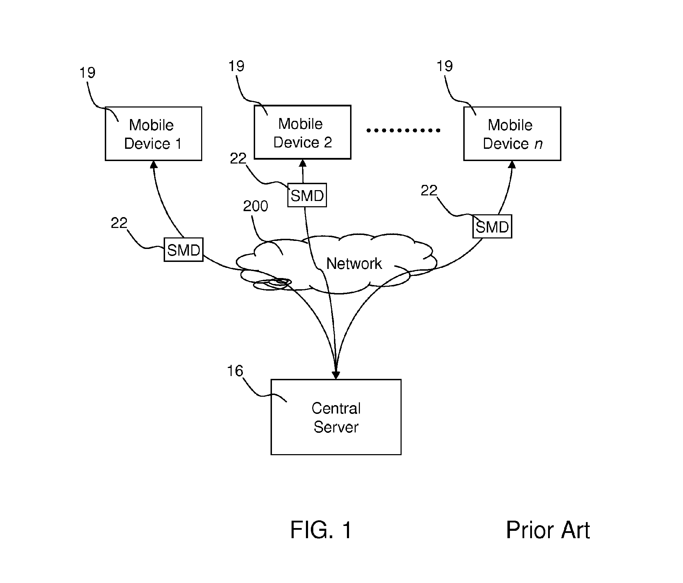

A system having a central server 16 operable to provide and receive social media data 22 (also identified as "SMD"), is shown in FIG. 1. One or more mobile devices 19 may access the social network by establishing a connection with the central server 16 via a network 200. The mobile devices 19 provide social media data 22 to the central server 16 and may obtain social media data 22 from the central server 16. For example, a mobile device 19 may provide social media data 22 to the central server 16 by uploading a multimedia file, posting an update, updating a user's profile, sending a message, etc. As can be seen in FIG. 1, several mobile devices may access the central server 16 simultaneously. The mobile devices 19 may communicate via the central server 16 over the social network. Typically numerous mobile devices 19 may join and thus access the social network and FIG. 1 illustrates *n* mobile devices having access to the central server 16 to exchange social media data with the central server 16. The central server 16 may comprise a plurality of servers. The central server 16 may be hosted in a cloud computing environment or as a portion of a network infrastructure, either public or private.

The central server 16 administering the social network may enable users to set permissions that allow or disallow other users to access the social media data 22 from the central server 16, or in a cloud comprising a plurality of central servers. For example, the central server 16 administering the social network may enable a list or a group of contacts that have been pre-selected by a user to access social media data 22 associated with that user's profile. The central server 16 may also prevent certain other users from accessing social media data associated with a particular user's profile.

Since social media data associated with the user's profile is stored in a central server 16, the information may no longer be controlled locally by the user's mobile device 19. Although the central server 16 may provide the user of the mobile device 19 privacy options to control how social media data 22 associated with that user's profile is shared, the central server 16 is ultimately in control of the data. The central server 16 may also fail to provide the user sufficient options to share particular content. For example, the central server 16 may enable a user the option to share all social media data 22 associated with a profile with a particular user or share no data associated with a particular user. The central server 16 may also fail to provide the user with the option to share only selected elements of the social media data 22 associated with the user's profile.

Moreover, since the central server 16 has control over the content that users have uploaded, it may be difficult to completely remove the content from the central server 16 or to control how the content on the central server 16 is shared or used by the administrator of the central server 16.

### SUMMARY

There is provided a method of providing social media data in a distributed network, the method comprising: discovering one or more mobile devices with which a network connection may be established with a host mobile device, the host mobile device comprising a social media application to provide the social media data to the one or more mobile devices; mapping, at the host mobile device, one or more candidate routes through which the network connection may be established; establishing the network connection between the host mobile device and the one or more mobile devices; and providing social media data to the one or more mobile devices.

There is also provided a method of obtaining social media data in a distributed network, the method comprising: discovering a host mobile device with which a network connection may be established, the host mobile device comprising a social media application from which the social media data can be obtained; mapping one or more candidate routes through which the network connection may be established; establishing the network connection with the host mobile device; and obtaining the social media data.

There is also provided a computer readable medium comprising computer executable instructions for providing social media data in a distributed network, the computer executable instructions comprising instructions for: discovering one or more mobile devices with which a network connection may be established with a host mobile device, the host mobile device comprising a social media application to provide the social media data to the one or more mobile devices; mapping, at the host mobile device, one or more candidate routes through which the network connection may be established; establishing the network connection between the host mobile device and the one or more mobile devices; and providing social media data to the one or more mobile devices.

There is also provided a host mobile device comprising a processor and memory, the memory comprising computer executable instructions for providing social media data in a distributed network by operating the processor to: discover one or more mobile devices with which a network connection may be established with the host mobile device, the host mobile device comprising a social media application to provide the social media data to the one or more mobile devices; map, at the host mobile device, one or more candidate routes through which the network connection may be established; establish the network connection between the host mobile device and the one or more mobile devices; and provide social media data to the one or more mobile devices.

There is also provided a computer readable medium comprising computer executable instructions for obtaining social media data in a distributed network, the computer executable instructions comprising instructions for: discovering a host mobile device with which a network connection may be established, the host mobile device comprising a social media application from which the social media data can be obtained; mapping one or more candidate routes through which the network connection may be established; establishing the network connection with the host mobile device; and obtaining the social media data.

There is also provided a mobile device comprising a processor and memory, the memory comprising computer executable instructions for obtaining social media data in a distributed network by operating the processor to: discover a host mobile device with which a network connection may be established, the host mobile device comprising a social media application from which the social media data can be obtained; map one or more candidate routes through which the network connection may be established; establish the network connection with the host mobile device; and obtain the social media data.

### BRIEF DESCRIPTION OF THE DRAWINGS

Embodiments will now be described by way of example only with reference to the appended drawings wherein:

FIG. 1 is a block diagram of an example social network of the prior art comprising a central server;

FIG. 2 is a block diagram of an example social network comprising a host mobile device;

FIG. 3 is a block diagram illustrating an example of a configuration of a mobile device;

FIG. 4 is a block diagram of an example social network comprising a plurality of host mobile devices;

FIG. 5 is a flow diagram of an example process for establishing a connection between a mobile device and a host mobile device;

FIG. 6 is a block diagram illustrating an example distributed social network comprising a plurality of host mobile devices connected via a plurality of nodes;

FIG. 7 is a block diagram illustrating a host mobile device and a mobile device registering with a registrar;

FIG. 8 is a block diagram illustrating a host mobile device obtaining internet protocol (IP) addresses by communicating with a reflexive server;

FIG. 9 is a block diagram illustrating another mobile device obtaining internet protocol (IP) addresses by communicating with a reflexive server;

FIG. 10 is a block diagram illustrating a detailed example of a configuration of a mobile device; and

FIG. 11 is a system diagram illustrating an environment in which data items are pushed from a host system to a mobile device, a router in such environment or the host system comprising a registrar.

### DETAILED DESCRIPTION

Embodiments will now be described with reference to the figures. It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

It will also be appreciated that that any module, component, server, computer, terminal or device exemplified herein that executes instructions may include or otherwise have access to computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the device or accessible or connectable thereto. Any application or module herein described may be implemented using computer readable/executable instructions that may be stored or otherwise held by such computer readable media.

Also, it will be appreciated that the examples and corresponding diagrams used herein are for illustrative purposes only. Different configurations and terminology can be used without departing from the principles expressed herein. For example, components and modules can be added, deleted, modified, or arranged with differing connections without departing from these principles.

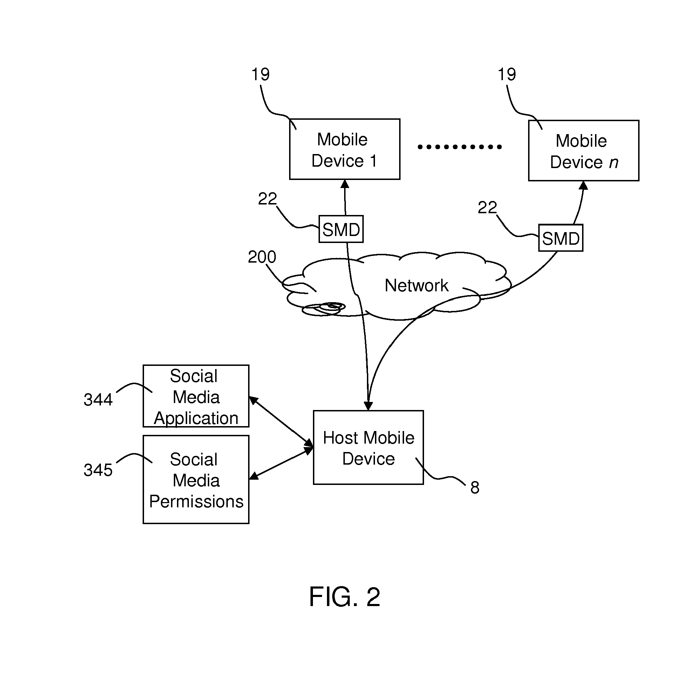

It has been found that disadvantages associated with the use of a central server in a social network system may be addressed by hosting a social network locally on a user's mobile device 19. The mobile device 19 would become a host mobile device 8 (see FIG. 2) to other mobile devices 19. For example, a user wishing to share social media data 22 with other users over a social network could host the social media data 22 on a host mobile device 8, enabling the user to have improved control the social media data and privacy options. For example, a social network hosted on a user's device may enable the user to permanently delete social media data, administer the sharing and deletion of the social media data and retain personal information on a device controlled by that user. Additionally, the user of the host mobile device 8 would not be required to perform the initial step of uploading social media data to a central server.

In one aspect, a system for a distributed social network is provided. The system comprises a host mobile device 8 operable to provide social media data 22 to one or more receiving mobile devices 19. The receiving mobile devices 19 may also be host mobile devices 8 to the host mobile device 8 or to other mobile devices 19. That is to say, a bidirectional exchange of social media data between two connected devices may be achieved according to the principles discussed herein. In another aspect, a method for a distributed social network is provided wherein the method comprises hosting social media data 22 on a host mobile device 8 and providing the social media data 22 to other mobile devices 19 in communication with the host mobile device 8.

The mobile device 19 can be a two-way communication device with advanced data communication capabilities including the capability to communicate with other mobile devices 19 or computer systems through a network 200 of transceiver stations. The mobile device 19 may have the capability to allow voice communications. Depending on the functionality provided by the mobile device 19, the mobile device 19 may be referred to as a data messaging device, a two-way pager, a cellular telephone with data messaging capabilities, a wireless Internet appliance, or a data communication device (with or without telephony capabilities).

It will be appreciated that although examples are provided in the context of a mobile device 19, the principles discussed herein are equally applicable to other communication devices, for example, desktop computers, laptops, tablet computers, communication systems in vehicles, etc.

Referring now to FIG. 2, a schematic diagram of a social media network is shown wherein social media data 22 is hosted on a host mobile device 8. A host mobile device 8 is in communication with up to n other mobile devices 19 over the network 200 in this example. The host mobile device 8 comprises, or is in communication with, a social media application 344 and may also comprise or have access to social media permissions 345.

When a mobile device 19 makes a request to obtain content from the social media application 344 on the host mobile device 8, the social media application 344 may identify the requesting mobile device 19. The social media application 344 identifies the requesting mobile device 19 via the address of the requesting mobile device 19, via a unique identifier of the mobile device 19, or via information that a user of the mobile device 19 has provided. A central service may aid the social media application 344 in identifying the requesting mobile device 19. Upon the social media application 344 identifying the mobile device 19, the host mobile device 8 may opt to establish a connection with the mobile device 19. The social media permissions 345 may, based on the identity of the mobile device 19, or the user of the mobile device 19, enable the host mobile device 8 to establish a connection with the mobile device 19. Upon the mobile device 19 establishing a connection with the host mobile device 8, the social media permissions 345 enables the host mobile device 8 to provide the mobile device 19 with social media data 22. The social media permissions 345 in this example, enables the host mobile device 8 to share some, none, or all of the social media data 22 on the host mobile device 8.

Social media data 22 may comprise text, audio, an image, a video clip, etc. It can be appreciated that several mobile devices may be operable to retrieve social media data 22 from a host mobile device 8. It can also be appreciated that a mobile device 19 may have established connections with a plurality of host mobile devices 8 and receive social media data 22 from each one of the host mobile devices 8.

A mobile device 19 may be also act as a host mobile device 8 and a host mobile device 8 may act as a mobile device 19. That is to say, a host mobile device 8 may operate as a mobile device 19 to obtain social media data 22 from other host mobile devices 8. A host mobile device 8 may obtain social media data 22 from another host mobile device 8 and provide social media data 22 to a second host mobile device 8.

The host mobile device 8 may comprise a hypertext transfer protocol (HTTP) service to receive incoming connection requests. The connection between the host mobile device 8 and a mobile device 19 may be a transmission control protocol (TCP) connection or may be a user datagram protocol (UDP) tunnel connection encapsulating TCP, for example, a virtual private network (VPN) or a port 80/443 connection which may use a traversal using relays around network address translator (TURN) server, as will be further described below. The type of the connection may depend on the network address translators, firewalls, and other network infrastructure in the network.

The connections between the host mobile device 8 and the mobile device 19 may be encrypted using various methods known in the art. The encryption may be performed using certificates generated in the host mobile device 8 or in the mobile device 19 using a dedicated chip. Alternatively, the certificates may be generated by a certificate authority and issued to each of the host mobile device 8 and the mobile device 19. It will be appreciated that in either case, a network service to enable lawful access to communications may be provided between the host mobile device 8 and the mobile device 19 as a specialized TURN server.

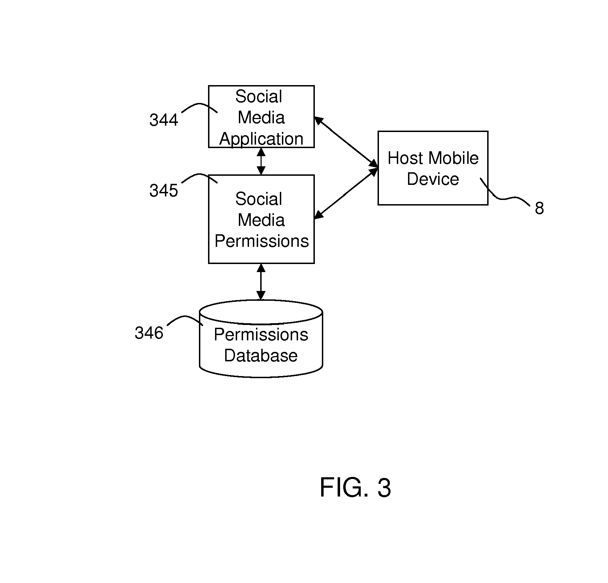

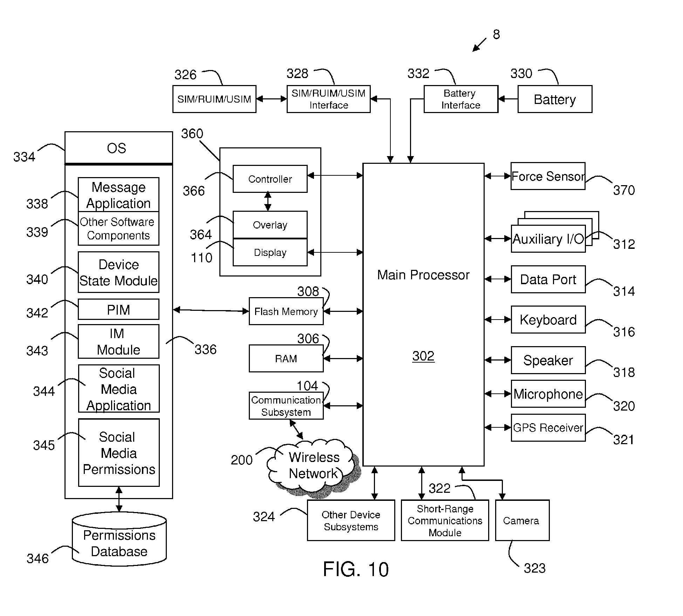

Turning to FIG. 3, an example block diagram of a host mobile device 8 is shown. The host mobile device 8 comprises, or is in communication with a social media application 344, which may be communicable with an operating system 334 of the host mobile device 8 (see also FIG. 10). The social media application 344 comprises, or is communicable with, a memory. The social media application 344 is in communication with the social media permissions 345 for setting access permissions to social media data 22. The social media permissions 345 may comprise, or otherwise have access to a permissions database 346, which stores permission settings relating to particular social media data 22 and particular social media network users.

The social media application 344 is operable to provide social media data 22 to other devices through a network 200, for example, a wireless network. The social media application 344 may be operable to receive social media data 22 provided over the wireless network.

The social media permissions 345 enable a user to enter permissions for sharing content depending on the user. For example, the social media permissions 345 can allow a user to create various groups of contacts, each group having a different policy for sharing social media data 22. For example, a user may create a group comprising friends, colleagues, or family members. The user could then, for each element of social media data 22, decide which individuals or groups have permission to access the data by providing permission information to the social media permissions 345. The social media permissions 345 selectively enables a connection to be established with certain mobile devices 19 or may selectively enable particular social media data 22 to be transferred over an established connection. The social media permissions 345 may require user information from the mobile device attempting to establish a connection or already in connection with the host mobile device 8. For example, the social media permissions 345 can be configured to enable a user to set permissions to enable friends and family to view a particular video file but prevent acquaintances from viewing the same file. The social media permissions 345 would therefore enable a user to share some social media data 22 with close contacts but hide that same data from other contacts.

The social media permissions 345 may also be operable to control permissions of specific social media data 22. For example, a user may wish to share some photographs publicly with all users but keep other photographs private. The social media permissions 345 would obtain instructions from a user to selectively share certain content, for example, the photographs that the user intends to make public, but not the photographs that the user intends to keep private. A detailed example of a host mobile device 8 comprising a social media application 344, a social media permissions 345, and a permissions database is provided in FIG. 10, described below.

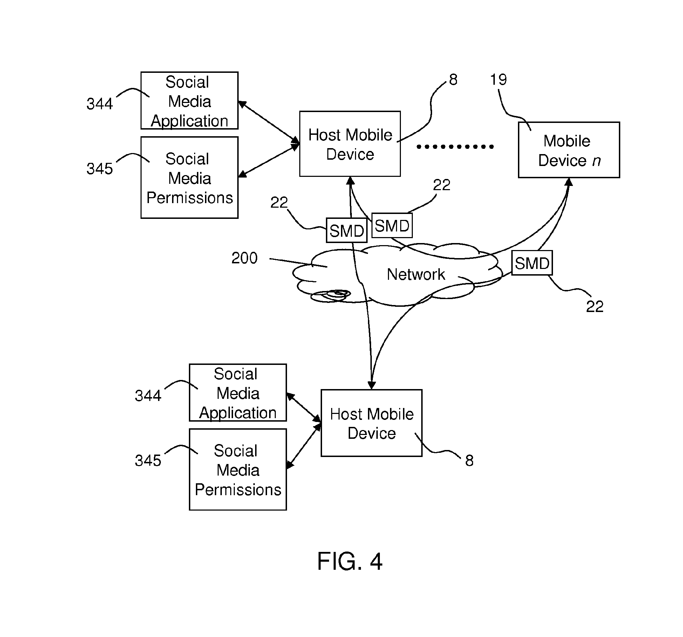

FIG. 4 illustrates a block diagram of a network of mobile devices comprising two host mobile devices 8. The host mobile devices 8 are operable to provide social media data 22 to any one of the other mobile devices 19 or host mobile devices 8 communicable over the network 200. As is shown in FIG. 3, each host mobile device 8 comprises social media application 344 and may further comprise a social media permissions 345 that performs the functions as described above.

As discussed above, many social media networks enable users to create one or more profiles, each comprising a set of social media data 22. For example, a user's profile may comprise a gallery of images, text relating to each image, a history of status updates, a profile image, and other multimedia, text, or location information. A user's profile may further comprise links to social media data 22 hosted on other host mobile devices 8. If a mobile device 19 is used to access social media data 22 from a host mobile device 8, the mobile device 19 may access a user's profile. If the mobile device 19 accesses a link on the user's profile, the link may redirect the mobile device 19 to another element of social media data 22 on the host mobile device 8 or the link may redirect the mobile device 19 to social media data 22 on another host mobile device 8. The host mobile device 8 hosting the link may provide social media data 22 comprising the link 22 to the mobile device requesting the link. The link may comprise an address or an identifier of a host mobile device 8. For example, the link may comprise a uniform resource locator (URL). The address component of the URL may be the addressing mechanism for the host mobile device 8. For example, a fully qualified domain name (FQDN) may be used as the addressing mechanism. In a peer to peer social network using the known algorithm Kademlia as the routing algorithm, the addressing mechanism may be a hash value, for example, a 256 bit hash value. The Kademlia routing algorithm will be further described below. Upon the mobile device 19 receiving the link, the mobile device 19 may activate the link to obtain social media data 22 from the host mobile device 8.

A potential advantage of enabling host mobile devices 8 to host social media content is that the social network may be highly scalable. For example, if each mobile device 19 in the social network is also a host mobile device 8, no increase in infrastructure is required. Since each additional user in the social network accesses the network through a host mobile device 8, network infrastructure is scaled with user growth. For example, if 1000 new users join the social network in a particular day, those thousand users host their own profiles on host mobile devices 8 and as such, do not require additional network infrastructure.

With a distributed social network, it has now been recognized that issues can be introduced due to the lack of a central server. For example, any connection needs to first be sought out, and in a mobile world where a device may gain and lose connectivity frequently, this connectivity loss can introduce excessive churn, thereby leading to lower performance at the device in terms of battery usage and latency in call establishment.

In particular, it has now been recognized that connectivity challenges exist when using a mobile device 19 as a host for social media data 22 rather than a centralized server 16 such as that shown in FIG. 1. Mobile devices 19 and host mobile device 8 may be connected through various potential or "candidate" routes. Mobile devices 19 comprising cellular, Wi-Fi, or other wireless transceivers may be in communication with a first host mobile device 8 when in a first location and a different host mobile device 8 when moved to a different location. Similarly, the address of the mobile device 19 may change when connected to a different host mobile device 8. The address of a host mobile device 8 may also change if the location of the host mobile device 8 changes. It is therefore necessary for a mobile device 19 to determine the address of a mobile device 8 hosting social media data 22 prior to mobile device 19 accessing the social media data 22.

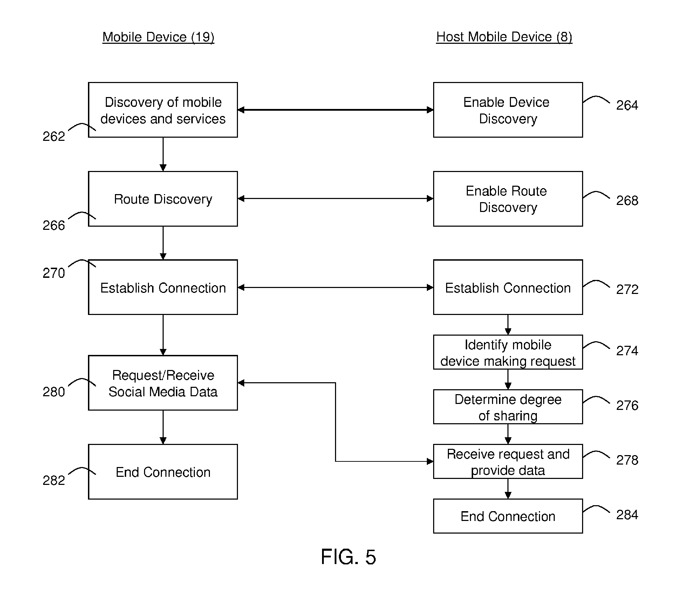

Turning to FIG. 5, an example method of a mobile device 19 forming a connection with a host mobile device 8 is shown. At 262, the mobile device 19 discovers one or more host devices 8 with which the mobile device 19 can form a connection.

The host device 8 may comprise various types of peer nodes that are enabled to be discovered at 264. In contrast to the typical cloud model wherein one or more servers delivers a service to one or more clients, services may be provided by a host mobile device 8 providing content to a peer mobile device 19. Infrastructure that may be used in a cloud may also be used in such a peer to peer type network. For example, a host mobile device 8 at a retail point of sale, such as a drive through ordering system, may establish a connection with a mobile device 19 and the mobile device 19 may provide the host mobile 8 device with customer information. Other nodes may comprise host mobile devices 8 hosting specialized content, for example, advertising content or a service such as a remote drive or a mapping service.

In the discovery stage, at 262 and 264, a mobile device 19 seeking to obtain social media data 22 from or provide social media data 22 to a host mobile device 8 seeks out the host mobile device 8. The mobile device 19 seeking a connection may use an identifier of the host mobile device 8 that is being sought.

Although the mobile device 19 seeking to make a connection with a host mobile device 8 may be aware of the internet protocol (IP) address of the host mobile device 8 that the mobile device 19 is attempting to reach, this IP address may not be routable, as the device may be located behind network infrastructure, such as a firewall.

One method of discovering host mobile devices 8 and other nodes on a network is using the Kademlia method, which is well known in the art. Briefly, Kademlia describes the structure of a network comprising a plurality of nodes in communication. Each node may be a mobile device 19 and/or a host mobile device 8. Each node is assigned an identifier, which a Kademlia algorithm uses to locate values including file hashes or keywords. The identifier of each node or host mobile device 8 stores information on where to obtain the desired data on the network. The identifiers provide a map to file hashes. A mobile device 19 seeking a social media connection will explore the network in several steps. In each step, the mobile device 19 finds nodes that are closer to the source of the desired data. This node discovery enables a mobile device 19 to find a host mobile device 8 of social media data 22 through a plurality of nodes connected to a network 200.

Upon discovering the host mobile device 8 or other node with which the mobile device 19 is operable to make a connection, the mobile device 19 may perform a route discovery at 266, to determine how to connect with a host mobile device 8. The host mobile device 8 enables route discovery at 268, e.g., as exemplified below. Route discovery may be complicated by network infrastructure, such as a network address translator (NAT). A NAT will cause the public IP address of a host mobile device 8 to differ from the private address of that same host mobile device 8. To perform the route discovery step, the mobile device 19 may employ various protocols including the traversal using relays around NAT (TURN) or session traversal utilities for NAT (STUN). STUN may be used to establish a list of candidate IP addresses. A TURN server may provide media hair pinning to enable a host mobile device 8 to determine its own public IP address. The host mobile device 8 may then provide its own IP address to a mobile device 19 such that the mobile device 19 may access content on the host mobile device 8. The STUN and TURN server may be a mobile device. The STUN and TURN servers may not store data. Data obtained by the STUN and TURN servers may be encrypted. TURN is a particularly useful protocol when traversing a symmetric NAT.

At 270 and 272, the mobile device 19 establishes a connection with the social media application 344 of the host mobile device 8. Once a connection is established, the social media application 344 in the host mobile device 8 may identify the mobile device 19 requesting the social media data 22 at 274. The social media application 344 may also identify the user of the mobile device 19. The social media permissions 345 may determine the degree to which information is shared at 276. Upon identifying the mobile device 19, the social media permissions 345 may provide to the identified mobile device 19 some or all of the social media data 22 on the host mobile device 8 at 278 and receive requests sent by the mobile device 19 at 280.

The mobile device 19 accessing the social media data 22 may create a persistent connection, a notification-type connection, or a request by name type connection. Once a persistent connection has been made, the mobile device 19 accessing the host mobile device 8 can make several requests and receive several responses from the host mobile device 8 at 280 throughout the duration of the connection. Each mobile device 19 or host mobile device 8 participating in a persistent connection is aware of the address of the mobile device 19 or host mobile device 8 with which the connection is established. Persistent connections may be useful for host mobile devices 8 that regularly share social media data 22. For example, a persistent connection may be used between mobile devices 19 and host mobile devices 8 owned by members of a family who regularly access social media data 22 from one-another. The persistent connection may remain active until a user of a mobile device 22 no longer wishes to access further social media data 22 or until the host mobile device 8 is no longer accessible. The connections end at 282 and 284, e.g., after a session is completed.

A notification-type connection may also be established between a host mobile device 8 and a mobile device 19. In a notification-type connection, upon the mobile device 19 establishing a connection with the host mobile device 8, the host mobile device 8 may provide updates if the address of the host mobile device 8 changes, thereby enabling the mobile device 19 to access the host mobile device 8. The mobile device 19 may subscribe to receive updates regarding changes to the address of the host mobile device 8. The update notification may be provided using the routing method, for example, using Kademlia. Upon receiving the notification, the mobile device 19 may establish a connection with the host mobile device 8.

As described above, STUN and TURN may be used to determine the IP address of the host mobile device 8 and provide the IP address to the mobile device 19. Fewer network resources are required for a notification type connection in comparison with a persistent connection. A notification type connection may be used to enable connections between users who communicate on a regular basis, for example, a daily basis but do not require a persistent connection.

Yet another type of connection may be established between a mobile device 19 and a host mobile device 8, as will now be described. The user of a mobile device 19 that wishes to establish a connection with a host mobile device 8 may wish to obtain social media data 22 from the host mobile device 8 infrequently. In this case, a request by name connection may be established wherein the mobile device 19 seeking the social media data 22 requests the host mobile device 8 by name or other identifier, for example, an IP address, each time that social media data 22 is required. A notification is best suited for a connection that is made less frequently than are the changes in the host mobile device's IP address.

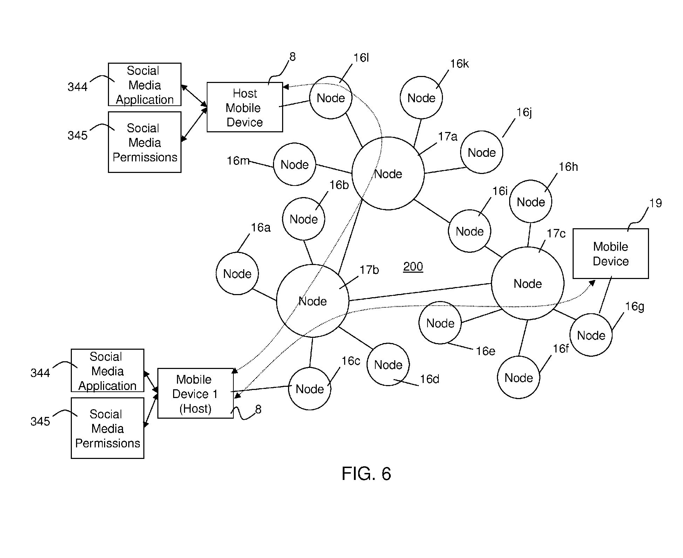

Referring now to FIG. 6, a network comprising a plurality of mobile devices 8 connected through a plurality of nodes 16a, 16b, ... 16m (referenced collectively as "nodes 16") is provided. It will be appreciated that some of the nodes 16 shown in FIG. 6 may act as supernodes 17a, 17b, 17c (three supernodes 17 shown in this example for illustrative purposes only), to serve as one of the network's relayers and/or proxy "servers", handling data flow and connections for other devices and nodes 16. The supernodes 17 may comprise a reliable connection to a network 200.

To avoid the need for a dedicated server, the plurality of nodes 16 can be relied upon to establish a connection between one or more host mobile devices 8 and one or more mobile devices 19. In this example, the host mobile devices 8 have an address for a particular node 16 in the network 200, which node 16 has an address for another node 16 or supernode 17 in the network 200 to establish a connection with the mobile device 19. In this way, via a series of "hops", a host mobile device 8 may be connected with another mobile device 19. For example, as shown in FIG. 6, the host mobile device 8 labeled "Mobile Device 1" can connect to node 17c, which can connect to supernode 17b. Supernode 17b can connect to supernode 17c, super node 17c can connect to node 16g, which is connectable to the mobile device 19.

However, when at least some of the nodes 16 being relied on are mobile devices 19 that may go in and out of coverage, reliability of a connection can pose problems and results in longer query times, false positives in locating users who may have dropped out of wireless coverage and instability in the session between the mobile device 19 and the host mobile device 8. In addition, the number of transactions that are associated with a network of this type tend to be high, leading to high power requirements and bandwidth requirements on the wireless interface.

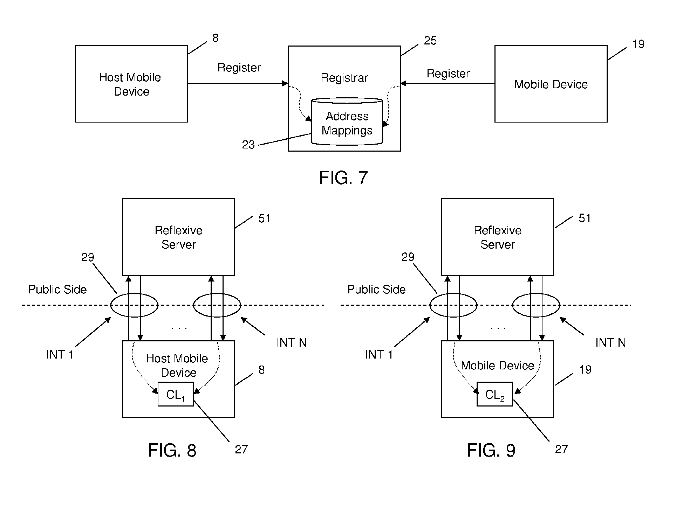

Turning now to FIG. 7, another connection method that may address the potential issues posed by the solutions shown in FIG. 6 is provided. A registrar 25 can be used to exchange address information, by relying on the persistent connection between the host mobile device 8 and the registrar 25. The exchange of address information allows a direct connection to be established between a mobile device 19 and a host mobile device 8. The registrar 25 may then be removed from the dialog, thus creating a direct link between a host mobile device 8 and a mobile device 19 while maintaining control of the initial registration and exchange. Moreover, by using an initial message to exchange address information rather than trying to maintain a connection through the registrar 25, various types of data communications can be accomplished simultaneously. Such control also enables the registrar 25 to modify parameters of the session in order to perform actions such as transparent interception, security enablement/disablement, communication recording, etc. It can be appreciated that the registrar 25 shown in FIG. 7 may be any server-type entity or mobile device that performs a registration and enables the exchange of address information.

As shown in FIG. 7, each of the mobile device 19 and the host mobile device 8 sends a registration request, command or other message to the registrar 25 to enable the registrar 25 to store address information in an address mappings database 23. This exchange allows a persistent connection to be maintained between the host mobile device 8 and the registrar 25 for at least a particular amount of time (e.g., a social media browsing session). For example, when entering an area where a particular service is valid, a host mobile device 8 can send a REGISTER message to the registrar 25 at a public IP address indicating its availability.

There may also be a hybrid solution wherein "supernodes" 17 are registered with the registrar 25 and used as routing assistants by peers in the peer network. The supernodes 17 may be mobile devices. In particular, the supernodes 17 may be mobile devices 19 with a stable network connection such as a server or a desktop computer, although other devices with wireless connections may be used. Using a supernode 17 with a more stable network connection reduces the criticality of the registrar 25. Thus, if a registrar 25 failed, the system may be operable to continue functioning, albeit with a potentially higher message count. However, the use of a registrar 25 for all peers reduces the scalability of the system. Therefore, a registrar 25 may be employed between only some peers or not at all.

Alternatively, the endpoint may use a SUBSCRIBE message to subscribe to services hosted on a node and/or on a host mobile device 8. In either case, the registrar 25 is now aware of the availability of the host mobile device 8. The host mobile device 8 may maintain a two way connection to the registrar 25, and this may be achieved with a Transmission Control Protocol (TCP) connection or User Datagram Protocol (UDP) connection, in an example embodiment. For a UDP connection, the host mobile device 8 maintains UDP port connectivity through regular pings to the registrar 25.

It has been found that in order to improve the likelihood of successfully traversing NAT gateways in the network, in order to open a direct connection between a mobile device 19 and a host mobile device 8, each of the host mobile device 8 and the mobile device 19 should have candidate address lists, to enable them to simultaneously send packets to each other using a hole punching technique to fool NATs and firewalls along the way into establishing a connection. In order to have the candidate address list 27 (also identified as "CL" in the figures - see FIGS. 8 and 9) for another mobile device 19, an out-of-dialog transaction can be used to exchange such lists. For example, when registered with the registrar 25, a request and response exchange can be initiated wherein the requests and responses exchanged contain the respective candidate lists 27. This exchange enables the mobile device 19 or host mobile device 8 having exchanged candidate address lists 27, to immediately begin trying the addresses in the lists to establish a direct connection.

FIGS. 8 and 9 illustrate example out-of-dialog transactions for a mobile device 8 and a host mobile device 8 respectively. Each of the host mobile device 8 and the mobile device 19 may be provided with private IP addresses and port numbers within a private network or sub-set of the wider Internet, which lies behind a gateway having a unique public IP address in the Internet. The gateways perform NAT to ensure communications returning to that mobile device in a particular session are returned to the public IP address and then translated back to the private IP address.

Due to the NAT, a host mobile device 8 may know its private IP address (i.e. the one assigned by the gateway), but not the public IP address of the gateway, since the NAT hides the public IP address by re-translating an incoming packet. In order to discover the public IP address, a reflexive server 51 can be used. For example, a binding method using a Session Traversal Utilities for NAT (STUN) type reflexive server 51 can be used. This binding is accomplished by the host mobile device 8 sending a Binding request message to a STUN server 51. As the Binding request message passes through a NAT, the NAT will modify the source transport address (i.e. the source IP address and source port) of the packet. As a result, the source transport address of the request received by the STUN server 51 will be the public IP address and port created by the NAT closes to the STUN server 51. This address is called a reflexive transport address. The STUN server 51 may then copy that source transport address (i.e. the reflexive address) into an XOR-MAPPED-ADDRESS attribute in a STUN Binding response and send the response back to the host mobile device 8 (i.e. the STUN client).

As this packet passes back through a NAT, the NAT will modify the destination transport address in the IP header, but the transport address in the XOR-MAPPED-ADDRESS attribute within the body of the response should remain untouched. In this way, the host mobile device 8 can learn its reflexive transport address allocated by the outermost NAT with respect to the STUN server 24 (e.g., multiple NATs may exist between host mobile device 8 and server 24). It can be appreciated that any reflexive-type server 24 or any other device or entity which is operable to return a public IP address in a response to an endpoint 10 can be used and the STUN-based example is for illustrative purposes only.

As shown in FIGS. 8 and 9, for each interface 29 to the network (e.g., including Wi-Fi, virtual private network (VPN), etc.) the host mobile device 8 can send a request to the reflexive server 51 which is at a known IP address in a public space within the network. The reflexive server 51 prepares a response that includes the public IP address allocated by the outermost NAT with respect to the reflexive server 51, typically in the body of the response, which enables the host mobile device 8 to build a candidate list (CL) 27. By querying the reflexive server 51 (or multiple reflexive servers 51 if necessary) over each interface to the network 12, the CL 27 can be made to include all IP addresses by which the host mobile device 8 can be addressed. For example, if the host mobile device 8 has a Wi-Fi interface, it would have an IP address assigned to that interface either statically or via a program such as the Dynamic Host Configuration Protocol (DHCP), as well as a public IP address if the host mobile device 8 is behind a NAT (i.e. how it is addressed outside of its sub-net). Each interface will typically have such a pair of addresses (i.e. private/public address pair).

Therefore, once the host mobile device 8 is registered with the registrar 25 as shown in FIG. 7, at this time, or at any time thereafter, the host mobile device 8 obtains a reflexive CL 27, that is, the list of IP addresses by which the device can be addressed either inside its local subnet or by a device external to the subnet, e.g., using STUN as discussed above.

As discussed above, if the mobile device 19 wishes to open a direct peer-to-peer connection to the host mobile device 8, to be most successful at getting through the NAT, the respective CLs 27 (i.e. CL₁ and CL₂) should be exchanged. Then the mobile device 19 and the host mobile device 8 simultaneously send packets to each other, e.g. using a Binding REQUEST format of STUN, fooling the NATs and firewalls into connecting the two devices 8, 19.

In order to enable the mobile device 19 and the host mobile device 8 to have the respective other CLs 27, an out-of-dialog transaction is used by sending a message of a format compatible with the registrar 25, e.g., a Session Initiation Protocol (SIP) MESSAGE or OPTIONS packet, to be proxied or otherwise forwarded to the other mobile device 19. As there is an existing open connection between all registered devices and the registrar 25, the incoming CL exchange request is forwarded to the correct destination. By containing the respective CL 27 in the request (or response), each of the host mobile device 8 or the mobile device 19 in the eventual dialog has address information suitable to begin a hole punching process to establish a direct connection.

Network Address Translation (NAT) traversal issues, that is, the hiding of subnets behind a gateway, typically means that to use SIP and other protocols such as Session Description Protocol (SDP), each endpoint needs to be aware of not just the internal IP address of the endpoint, but also the external representation of those IP addresses (i.e. where the endpoint can be reached publicly - the public side of a NAT), so that the endpoint can be addressed by a device in another subnet.

It has been recognized that a registrar 25 or other server or proxy device can be used to provide a path between a pair of mobile devices 19 or host mobile devices 8 for exchanging addressing information, in order to establish a direct connection, e.g. using a SIP MESSAGE. Once that connection is established, the connection may be used for any social media data communications without requiring an additional INVITE through the registrar 25, server, or proxy device. In this way, each endpoint device possesses a list of candidate addresses to establish a direct connection, which may then be used for any type of communication. By relying on a registrar or other server to enable the candidate lists to be exchanged, control can still be maintained if necessary, since the candidate lists can be modified, e.g. to enable a transparent interception, to impose or remove security restrictions, etc.

Referring now to FIG. 10, a detailed example of a host mobile device 8 is shown. It can be appreciated that the other mobile devices 19 may also utilize a similar configuration. The host mobile device 8 includes a number of components such as a main processor 302 that controls the overall operation of the host mobile device 8. Communication functions are performed through a communication subsystem 104. The communication functions comprise data communication and may also comprise voice communication. The communication subsystem 104 receives data from and sends data to a wireless network 200.

As outlined in FIG. 3, the host mobile device 8 comprises, or is in communication with a social media application 344, which may be linked to the operating system 334. The social media application 344 comprises, or is linked to, a memory, for example, flash memory 308 or random access memory 306.

In the example of the host mobile device 8, the communication subsystem 104 is configured in accordance with the GSM and General Packet Radio Services (GPRS) standards, which is used worldwide. Other communication configurations that are equally applicable are the 3G and 4G networks such as Enhanced Data-rates for Global Evolution (EDGE), Universal Mobile Telecommunications System (UMTS) and High-Speed Downlink Packet Access (HSDPA), Long Term Evolution (LTE), Worldwide Interoperability for Microwave Access (Wi-Max), etc. New standards are still being defined, but it is believed that they will have similarities to the network behavior described herein, and it will also be understood by persons skilled in the art that the examples described herein are intended to use any other suitable standards that are developed in the future. The wireless link connecting the communication subsystem 104 with the wireless network 200 represents one or more different Radio Frequency (RF) channels, operating according to defined protocols specified for GSM/GPRS communications.

The main processor 302 may interact with additional subsystems such as a Random Access Memory (RAM) 306, a flash memory 308, a display 360, an auxiliary input/output (I/O) subsystem 312, a data port 314, a keyboard 316 (physical, virtual, or both), a speaker 318, a microphone 320, a GPS receiver 321, short-range communications module 322, a camera 323, and other device subsystems 324. Some of the subsystems of the mobile device 8 perform communication-related functions, whereas other subsystems may provide "resident" or on-device functions. By way of example, the touch-sensitive display 360 and the keyboard 316 may be used for both communication-related functions, such as entering a text message for transmission over the wireless network 200, and device-resident functions such as a calculator or task list.

The host mobile device 8 can send and receive communication signals over the wireless network 200 after any required network registration or activation procedures have been completed. Network access may be associated with a subscriber or user of the host mobile device 8. To identify a subscriber, the host mobile device 8 may use a subscriber module component or "smart card" 326, such as a SIM, a Removable User Identity Module (RUIM) and a Universal Subscriber Identity Module (USIM). In the example shown, a SIM/RUIM/USIM 326 is to be inserted into a SIM/RUIM/USIM interface 328 in order to communicate with a network.

The host mobile device 8 is typically a battery-powered device and includes a battery interface 332 for receiving one or more rechargeable batteries 330. In at least some examples, the battery 330 can be a smart battery with an embedded microprocessor. The battery interface 332 is coupled to a regulator (not shown), which assists the battery 330 in providing power to the mobile device 8. Although current technology makes use of a battery, future technologies such as micro fuel cells may provide the power to the mobile device 8.

The host mobile device 8 also includes an operating system 334 and modules 338 to 345. The operating system 334 and the modules 336 to 345, may comprise computer executable instructions that may be executed by the main processor 302 and stored in a persistent store such as the flash memory 308, which may alternatively be a read-only memory (ROM) or similar storage element (not shown). Those skilled in the art will appreciate that portions of the operating system 334 and modules 336 to 345, such as specific device applications, or parts thereof, may be temporarily loaded into a volatile store such as the RAM 306. Other computer executable instructions may also be included, as is well known to those skilled in the art.

Other modules may include a message application 338, a device state module 340, a Personal Information Manager (PIM) 342, an IM module 360. A message application 338 can be any suitable software program that allows a user of the mobile device 8 to send and receive electronic messages, wherein messages are typically stored in the flash memory 308 of the mobile device 8. A device state module 340 provides persistence, i.e. the device state module 340 ensures that important device data is stored in persistent memory, such as the flash memory 308, so that the data is not lost when the mobile device 8 is turned off or loses power. A PIM 342 includes functionality for organizing and managing data items of interest to the user, such as, but not limited to, e-mail, contacts, calendar events, and voice mails, and may interact with the wireless network 200.

Other types of software applications or modules 339 can also be installed on the host mobile device 8. These software applications 339 can be pre-installed applications (i.e. other than message application 338) or third party applications, which are added after the manufacture of the host mobile device 8. Examples of third party applications include games, calculators, utilities, etc.

The additional applications 339 can be loaded onto the mobile device 10 through at least one of the wireless network 200, the auxiliary I/O subsystem 312, the data port 314, the short-range communications module 322, or any other suitable device subsystem 324.

The data port 314 can be any suitable port that enables data communication between the mobile device 10 and another computing device. The data port 314 can be a serial or a parallel port. In some instances, the data port 314 can be a Universal Serial Bus (USB) port that includes data lines for data transfer and a supply line that can provide a charging current to charge the battery 330 of the host mobile device 8.

For voice communications, received signals are output to the speaker 318, and signals for transmission are generated by the microphone 320. Although voice or audio signal output is accomplished primarily through the speaker 318, the display 110 can also be used to provide additional information such as the identity of a calling party, duration of a voice call, or other voice call related information.

The touch-sensitive display 360 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. In the presently described example, the touch-sensitive display 360 is a capacitive touch-sensitive display which includes a capacitive touch-sensitive overlay 364. The overlay 364 may be an assembly of multiple layers in a stack which may include, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

The display 110 of the touch-sensitive display 360 may include a display area in which information may be displayed, and a non-display area extending around the periphery of the display area. Information is not displayed in the non-display area, which is utilized to accommodate, for example, electronic traces or electrical connections, adhesives or other sealants, and/or protective coatings around the edges of the display area.

In some examples, an optional force sensor 370 or force sensors is disposed in any suitable location, for example, between the touch-sensitive display 360 and a back of the host mobile device 8 to detect a force imparted by a touch on the touch-sensitive display 360. The force sensor 370 may be a force-sensitive resistor, strain gauge, piezoelectric or piezoresistive device, pressure sensor, or other suitable device. Force as utilized throughout the specification refers to force measurements, estimates, and/or calculations, such as pressure, deformation, stress, strain, force density, force-area relationships, thrust, torque, and other effects that include force or related quantities.

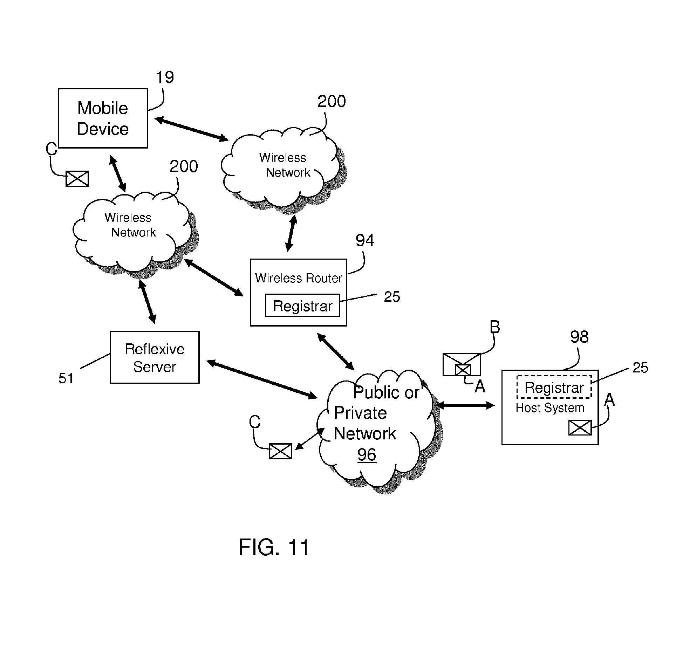

FIG. 11 is an example system diagram showing the redirection of user data items (such as message A or C) from a corporate enterprise computer system (host system) 98 to the user's mobile device 19 via a wireless router 94. The wireless router 94 provides the wireless connectivity functionality as the wireless router 94 acts to both abstract most of the wireless network's 200 complexities, and also implements features necessary to support pushing data to the mobile device 19. Although not shown, a plurality of mobile devices may access data from the host system 98. In this example, message A in FIG. 11 represents an internal message sent from, e.g. a desktop computer within the host system 98, to any number of server computers in a corporate network (e.g. LAN), which may, in general, include a database server, a calendar server, an E-mail server, a voice-mail server, etc.

As can be seen in FIG. 11, the wireless router 94 can be configured to include or otherwise provide the registrar 25 or components or modules capable of providing similar services. The registrar 25 could also be included in or be provided by the host system 98. A reflexive server 51 is also shown in FIG. 11, which can be communicated with via the wireless network 200 or a public or private network 96 or both. Therefore, it can be appreciated that the principles discussed above in connection with FIGS. 1 to 10 may be applied to any communication system comprising an entity capable of providing proxy or server- like functionality.

Message C in FIG. 11 represents an external message from a sender that is not directly connected to the host system 98, such as the user's host mobile device 19, some other user's mobile device 19 (not shown), or any user connected to the public or private network 96 (e.g., the Internet). Message C could be e-mail, voice-mail, an instant message (IM), calendar information, database updates, web-page updates or could even represent a command message from the user's host mobile device 8 to the host system 98. The host system 98 may comprise, along with the typical communication links, hardware and software associated with a corporate enterprise computer network system, one or more wireless mobility agents, a transmission control protocol (TCP)/Internet Protocol (IP) (TCP/IP) connection, a collection of data stores, (for example a data store for e-mail could be an off-the-shelf mail server like Microsoft Exchange® Server or Lotus Notes® Server), all within and behind a corporate firewall.

The mobile device 19 may be adapted for communication within wireless network 200 via wireless links, as required by each wireless network 200 being used. As an illustrative example of the operation for a wireless router 94 shown in FIG. 11, consider a data item A, repackaged in outer envelope B (the packaged data item A now referred to as "data item (A)") and sent to the mobile device 19 from an Application Service Provider (ASP) in the host system 98. Within the ASP is a computer program, similar to a wireless mobility agent, running on any computer in the ASP's environment that is sending requested data items from a data store to a mobile device 19. The mobile-destined data item (A) is routed through the network 96, and through the wireless router's firewall (not shown) protecting the wireless router 94.

Although the above describes the host system 98 as being used within a corporate enterprise network environment, this is just one embodiment of one type of host service that offers push-based messages for a handheld wireless device that is capable of notifying and preferably presenting the data to the user in real-time at the mobile device 19 when data arrives at the host system 98.

By offering a wireless router 94 (sometimes referred to as a "relay"), there are a number of major advantages to both the host system 98 and the wireless network 200. The host system 98 in general runs a host service that is considered to be any computer program that is running on one or more computer systems. The host service is said to be running on a host system 98, and one host system 98 can support any number of host services. A host service may or may not be aware of the fact that information is being channeled to host mobile devices 8 or mobile devices 19. For example an e-mail or message program might be receiving and processing e-mail while an associated program (e.g., an e-mail wireless mobility agent) is also monitoring the mailbox for the user and forwarding or pushing the same e-mail to a wireless device. A host service might also be modified to prepared and exchange information with mobile devices 8 via the wireless router 94, like customer relationship management software. In a third example, there might be a common access to a range of host services. For example a mobility agent might offer a Wireless Access Protocol (WAP) connection to several databases.

In data messaging environments, the wireless router 94 may abstract the mobile device 8 and wireless network 200, offer push services to standard web-based server systems and allow a host service in a host system 98 to reach the mobile device 19 in many countries.

The host system 98 shown herein has many methods when establishing a communication link to the wireless router 94. For one skilled in the art of data communications the host system 98 could use connection protocols like TCP/IP, X.25, Frame Relay, Integrated Services Digital Network (ISDN), Asynchronous Transfer Mode (ATM) or many other protocols to establish a point-to-point connection. Over this connection there are several tunnelling methods available to package and send the data, some of these include: Hypertext Transfer Protocol (HTTP)/Hypertext Mark-up Language (HTML), HTTP/Extensible Markup Language (XML), HTTP/Proprietary, File Transfer Protocol (FTP), Simple Mail Transfer Protocol (SMTP) or some other proprietary data exchange protocol. The type of host systems 98 that might employ the wireless router 94 to perform push could include: field service applications, e-mail services, IM services, stock quote services, banking services, stock trading services, field sales applications, advertising messages and many others. This wireless network 200 abstraction is made possible by the wireless router 94, which implements this routing and push functionality. The type of user-selected data items being exchanged by the host could include: E-mail messages, instant messages, calendar events, meeting notifications, address entries, journal entries, personal alerts, alarms, warnings, stock quotes, news bulletins, bank account transactions, field service updates, stock trades, heart-monitoring information, vending machine stock levels, meter reading data, GPS data, etc., but could, alternatively, include any other type of message that is transmitted to the host system 98, or that the host system 98 acquires through the use of intelligent agents, such as data that is received after the host system 98 initiates a search of a database or a website or a bulletin board.

The wireless router 94 provides a range of services to make creating a push-based host service possible. These networks may comprise: (1) the Code Division Multiple Access (CDMA) network, (2) the Groupe Special Mobile or the Global System for Mobile Communications (GSM) and the General Packet Radio Service (GPRS), and (3) the existing and upcoming third-generation (3G) and fourth generation (4G) networks like Enhanced Data Rates for GSM Evolution (EDGE), Universal Mobile Telecommunications System (UMTS) and High-Speed Downlink Packet Access (HSDPA), Long Term Evolution (LTE), Wi-Max etc. Some older examples of data-centric networks include, but are not limited to: (1) the Mobitex Radio Network ("Mobitex") and (2) the DataTAC Radio Network ("DataTAC").

To be effective in providing push services for host systems 98, the wireless router 94 may implement a set of defined functions. It can be appreciated that one could select many different hardware configurations for the wireless router 94, however, many of the same or similar set of features would likely be present in the different configurations.

The steps or operations in the flow charts and diagrams described herein are just for example. There may be many variations to these steps or operations without departing from the spirit of the invention or inventions. For instance, the steps may be performed in a differing order, or steps may be added, deleted, or modified.

Although the above has been described with reference to certain specific embodiments, various modifications thereof will be apparent to those skilled in the art without departing from the scope of the claims appended hereto.

## Claims

1. A method of providing social media data in a distributed network, the method comprising:
discovering one or more mobile devices with which a network connection may be established with a host mobile device, the host mobile device comprising a social media application to provide the social media data to the one or more mobile devices;
mapping, at the host mobile device, one or more candidate routes through which the network connection may be established;
establishing the network connection between the host mobile device and the one or more mobile devices; and
providing social media data to the one or more mobile devices.

2. The method of claim 1, wherein the one or more mobile devices are discovered by applying a Kademlia algorithm.

3. The method of claim 1 or claim 2 further comprising identifying the one or more mobile devices.

4. The method of claim 3, further comprising enabling the host mobile device to provide the social media data to at least one selected mobile device by applying social media permissions.

5. The method of claim 3, further comprising enabling the host mobile device to provide selected social media data to the one or more mobile devices by applying social media permissions.

6. The method of any one of claims 1 to 5 further comprising enabling an additional host mobile device to:
discover mobile devices with which a network connection may be established;
map one or more candidate routes through which the network connection may be established; and
establish a connection with the one or more mobile devices over the network connection.

7. The method of any one of claims 1 to 6, the host mobile device establishing the network connection using at least one of: a session traversal utilities for network address translation (STUN) process, and a traversal using relays around NAT (TURN) process.

8. A method of obtaining social media data in a distributed network, the method comprising:
discovering a host mobile device with which a network connection may be established, the host mobile device comprising a social media application from which the social media data can be obtained;
mapping one or more candidate routes through which the network connection may be established;
establishing the network connection with the host mobile device; and
obtaining the social media data.

9. The method of claim 8 wherein the host mobile device is discovered by applying a Kademlia algorithm.

10. The method of claim 8 or claim 9 further comprising sending a request for the social media data to the host mobile device over the network connection.

11. The method of claim 10 wherein the social media data is provided to selected mobile devices in accordance with social media permissions.

12. The method of claim 10 wherein selected social media data is obtained in accordance with social media permissions.

13. The method of any one of claims 8 to 12, the network connection being established using at least one of: a session traversal utilities for network address translation (STUN) process, and a traversal using relays around NAT (TURN) process.

14. A computer readable medium comprising computer executable instructions for performing the method according to any one of claims 1 to 13.

15. A mobile device comprising a processor and memory, the memory comprising computer executable instructions for performing the method according to any one of claims 1 to 7 as a host mobile device, or for performing the method according to any one of claims 8 to 13 as a mobile device.

## Amended claims

### Amended claims in accordance with Rule 137(2) EPC.

**1.** A method of providing social media data (22) in a distributed network (200), the method comprising:
discovering one or more mobile devices (19) with which a network connection may be established with a host mobile device (8), the host mobile device (8) comprising a social media application (344) to control sharing of social media data (22) with the one or more mobile devices (19);
mapping, at the host mobile device (8), one or more candidate routes through which the network connection may be established;
establishing the network connection between the host mobile device (8) and the one or more mobile devices (19); and
hosting a social network locally on the host mobile device (8) by providing social media data (22) to the one or more mobile devices (19) via the network connection instead of using a central server (16).

**2.** The method of claim 1, wherein the one or more mobile devices (19) are discovered by applying a Kademlia algorithm.

**3.** The method of claim 1 or claim 2 further comprising identifying the one or more mobile devices (19).

**4.** The method of claim 3, further comprising enabling the host mobile device (8) to provide the social media data (8) to at least one selected mobile device (19) by applying social media permissions (346).

**5.** The method of claim 3, further comprising enabling the host mobile device (8) to provide selected social media data (22) to the one or more mobile devices (19) by applying social media permissions (346).

**6.** The method of any one of claims 1 to 5 further comprising enabling an additional host mobile device (8) to:
discover mobile devices (19) with which a network connection may be established;
map one or more candidate routes through which the network connection may be established; and
establish a connection with the one or more mobile devices (19) over the network connection.

**7.** The method of any one of claims 1 to 6, the host mobile device (8) establishing the network connection using at least one of: a session traversal utilities for network address translation (STUN) process, and a traversal using relays around NAT (TURN) process.

**8.** A method of obtaining social media data (22) in a distributed network (200), the method comprising:
discovering a host mobile device (8) with which a network connection may be established, the host mobile device (8) comprising a social media application (344) for hosting a social network locally on the host mobile device (8) via the network connection instead of using a central server (16) by controlling sharing of the social media data (22) with other mobile devices (19);
mapping one or more candidate routes through which the network connection may be established;
establishing the network connection with the host mobile device (8); and
obtaining the social media data (22) from the host mobile device (8).

**9.** The method of claim 8 wherein the host mobile device (8) is discovered by applying a Kademlia algorithm.

**10.** The method of claim 8 or claim 9 further comprising sending a request for the social media data (22) to the host mobile device (8) over the network connection.

**11.** The method of claim 10 wherein the social media data (22) is provided to selected mobile devices (19) in accordance with social media permissions (346).

**12.** The method of claim 10 wherein selected social media data (22) is obtained in accordance with social media permissions (346).

**13.** The method of any one of claims 8 to 12, the network connection being established using at least one of: a session traversal utilities for network address translation (STUN) process, and a traversal using relays around NAT (TURN) process.

**14.** A computer readable medium comprising computer executable instructions for performing the method according to any one of claims 1 to 13.

**15.** A mobile device (8, 19) comprising a processor (302) and memory (308, 336), the memory (308, 336) comprising computer executable instructions for performing the method according to any one of claims 1 to 7 as a host mobile device (8), or for performing the method according to any one of claims 8 to 13 as a mobile device (19).
